# EUROPEAN PATENT SPECIFICATION

(11) **EP 4 528 106 B1**
(45) Date of publication and mention of the grant of the patent: **02.12.2026**
(21) Application number: 23862896.0
(22) Date of filing: 17.08.2023
(51) Int. Cl.: F04B 15/08, F04B 53/14, F16J 9/08, F16J 9/26

(54) **BOOSTER PUMP AND HYDROGEN SUPPLY SYSTEM**
BOOSTERPUMPE UND WASSERSTOFFVERSORGUNGSSYSTEM
POMPE DE SURALIMENTATION ET SYSTÈME D'ALIMENTATION EN HYDROGÈNE

(30) Priority: 09.09.2022 JP 2022143781
(43) Date of publication of application: 26.03.2025
(73) Proprietor: Mitsubishi Heavy Industries, Ltd., Tokyo 100-8332 (JP)
(72) Inventor: HARADA, Motoshi, Tokyo 100-8332 (JP); NAKAMICHI, Kenji, Tokyo 100-8332 (JP); KIHARA, Yuichi, Tokyo 100-8332 (JP); ASAI, Hideaki, Tokyo 100-8332 (JP); MITSUDA, Kimihiko, Tokyo 100-8332 (JP)
(74) Representative: Cabinet Beau de Loménie
(86) International application number: PCT/JP2023/029697
(87) International publication number: WO 2024/053356

(56) References cited:
- JP-A- 2004 162 632
- JP-A- 2007 100 646
- JP-A- 2009 180 090
- JP-A- 2012 117 393
- JP-A- 2012 117 393
- JP-A- 2019 190 628
- JP-A- 2021 001 647
- JP-A- 2021 001 647
- JP-A- 2022 035 456
- JP-A- H06 229 476
- JP-A- S62 110 076
- JP-B1- 6 424 369
- US-A- 3 145 629
- US-A1- 2021 180 694
- US-A1- 2021 180 694

## Description

### Field

The present disclosure relates to a pressure boosting pump for boosting the pressure of low-temperature fluids such as liquid hydrogen and a hydrogen supply system having the pressure boosting pump.

### Background

Examples of conventional pressure boosting pumps include one described in Patent Literature 1 below. The pressure boosting pump described in Patent Literature 1 includes a cylinder block having a compression chamber, a suction valve configured to cause a low-temperature fluid to be sucked into the compression chamber, a piston configured to compress the low-temperature fluid in the compression chamber, and a discharge valve configured to cause the compressed low-temperature fluid to be discharged. In the pressure boosting pump, the piston is movably supported on the cylinder block. The piston is fitted with a piston ring on its outer periphery to prevent leakage of a high-pressure low-temperature fluid from the compression chamber. Examples of such a piston ring include one described in Patent Literature 2 below.
Patent Literature 3 discloses a piston ring applied to a piston-type pump that compresses and pressurizes a low-temperature fluid or the like, and a booster pump including the piston ring.
Patent Literature 4 discloses a piston ring set for a cryogenic pump which comprises two concentric piston rings. Citation List

### Patent Literature

Patent Literature 1: Japanese Patent No. 4031807
Patent Literature 2: Japanese Patent No. 6193291
Patent Literature 3: Japanese Patent No. 2012117393A
Patent Literature 4: US Patent No. 2021/180694A1

### Summary

### Technical Problem

For conventional piston rings, resin materials such as polytetrafluoroethylene (PTFE) and polyetheretherketone (PEEK) are used. For piston rings, high sealing performance with low friction, low wear, and high strength is required. However, when the pressure of the low-temperature fluid used in the pressure boosting pump becomes ultra-high pressure (for example, 100 MPa), unfortunately it becomes difficult to ensure sufficient performance.

The present disclosure solves the problem described above, and an object thereof is to provide a pressure boosting pump and a hydrogen supply system improving sealing performance.

### Solution to Problem

In order to solve the above-described problem, a pressure boosting pump as defined in claim 1 is provided. The pressure boosting pump includes: a cylinder having a compression chamber; a suction valve configured to cause a low-temperature fluid to be sucked into the compression chamber; a piston movably supported on the cylinder and configured to compress the low-temperature fluid in the compression chamber; a discharge valve configured to cause the low-temperature fluid in the compression chamber to be discharged; and a piston ring provided on an outer periphery of the piston. The piston ring has a piston ring main body positioned closer to an inner peripheral face of the cylinder, and an inner ring positioned closer to a center of the piston than the piston ring main body is. The inner ring has a hardness lower than a hardness of the piston ring main body.

A hydrogen supply system according to the present disclosure includes: a compression device including the pressure boosting pump configured to compress liquid hydrogen as a low-temperature fluid; an evaporation device configured to vaporize the liquid hydrogen compressed by the compression device; and a dispenser configured to supply the hydrogen gas vaporized by the evaporation device. Advantageous Effects of Invention

The pressure boosting pump and the hydrogen supply system of the present disclosure can improve sealing performance.

### Brief Description of Drawings

FIG. 1 is a schematic diagram of an overall configuration of a hydrogen supply system of a first embodiment.
FIG. 2 is a schematic configuration diagram of a compression device.
FIG. 3 is a vertical sectional view of the main part of a pressure boosting pump of the first embodiment.
FIG. 4 is a sectional view of a mounting part of a piston ring.
FIG. 5 is a schematic diagram illustrating pressure distributions acting on the piston ring.
FIG. 6 is a schematic diagram illustrating the operation of the piston ring.
FIG. 7 is a sectional view of a mounting part of a piston ring used for a pressure boosting pump of a second embodiment.
FIG. 8 is a schematic diagram illustrating pressure distributions acting on the piston ring.
FIG. 9 is a schematic diagram illustrating the operation of the piston ring.

### Description of Embodiments

The following describes a preferred embodiment of the present disclosure in detail with reference to the accompanying drawings. The present disclosure is not limited by this embodiment, and when there are a plurality of embodiments, combinations of the embodiments are also included. The components in the embodiment include ones that those skilled in the art can easily assume, substantially the same ones, and ones in what is called the range of equivalence.

### [First Embodiment]

### <Hydrogen Supply System>

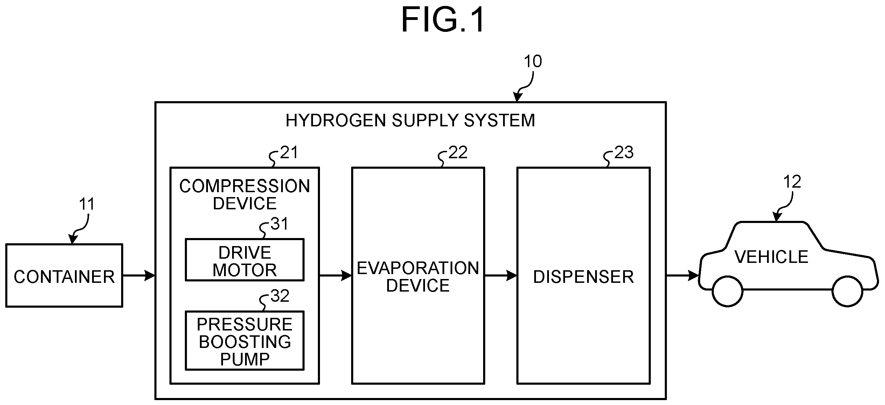

FIG. 1 is a schematic diagram of an overall configuration of a hydrogen supply system of a first embodiment.

As illustrated in FIG. 1, this hydrogen supply system 10 supplies (refills) liquid hydrogen stored in a container 11 as hydrogen gas at a certain pressure to a power source of a vehicle 12. The power source is, for example, a fuel cell, a hydrogen engine, or the like and is installed in the vehicle 12. The hydrogen supply system 10 is, for example, what is called a hydrogen station facility supplying (refilling) hydrogen gas as a fuel to the power source of the vehicle 12. However, the hydrogen supply system 10 is not limited to the one supplying hydrogen gas to the power source of the vehicle 12 but also compresses and supplies low-temperature fluids (for example, liquid hydrogen, liquid nitrogen, liquid oxygen, liquefied carbon dioxide gas, liquefied natural gas, liquefied propane gas, and the like).

The hydrogen supply system 10 has a compression device 21, an evaporation device 22, and a dispenser 23. The compression device 21 compresses liquid hydrogen (a low-temperature fluid) supplied from the container 11 to a certain high pressure (a high-pressure state) set in advance. The evaporation device 22 vaporizes the high-pressure liquid hydrogen compressed by the compression device 21 to generate hydrogen gas. The dispenser 23 fills the power source of the vehicle 12 with the hydrogen gas generated by the evaporation device 22.

The compression device 21 compresses the liquid hydrogen stored in the container 11 to a certain high pressure, but this is not limiting. For example, if the container 11 stores hydrogen gas, the compression device 21 may compress the hydrogen gas stored in the container 11 to a certain high pressure.

The compression device 21 has a drive motor 31 and a pressure boosting pump 32. The drive motor 31 is an electric motor that can be driven by externally supplied electric power. The number of revolutions of the drive motor 31 is controlled by an inverter (not shown). The drive motor 31 transmits rotational power to the pressure boosting pump 32. The pressure boosting pump 32 operates by the rotational power of the drive motor 31.

### <Compression Device>

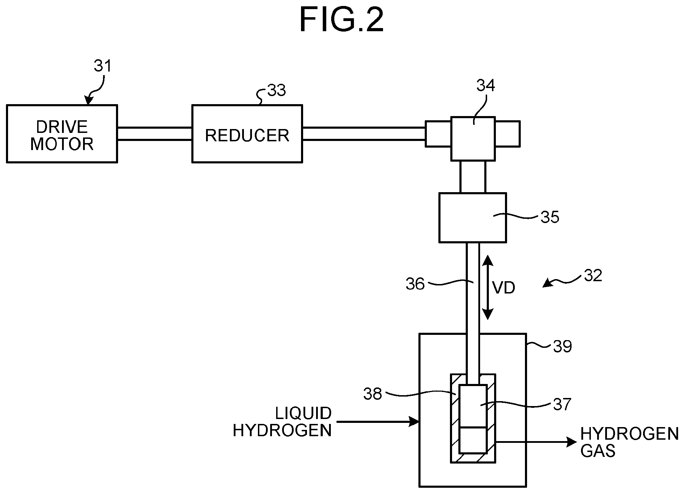

FIG. 2 is a schematic diagram of the compression device.

As illustrated in FIG. 2, the pressure boosting pump 32 is coupled to the drive motor 31 via a reducer 33. The reducer 33 reduces the rotational power of the drive motor 31 and transmits it to the pressure boosting pump 32. The pressure boosting pump 32 is a reciprocating pump. The pressure boosting pump 32 operates by converting the rotational power of the drive motor 31, which has been reduced by the reducer 33, into reciprocating power. The pressure boosting pump 32 alternately performs suction and compression (pressure boosting) of liquid hydrogen by reciprocating power to compress the sucked liquid hydrogen to a certain high-pressure state and discharges it to the outside.

The pressure boosting pump 32 has a crank mechanism 34, a crosshead 35, a piston rod 36, a piston 37, and a cylinder block 38.

The crank mechanism 34 converts the rotational power transmitted from the reducer 33 into linear reciprocating power and transmits it to the crosshead 35. The crosshead 35 reciprocates in a vertical direction VD by the reciprocating power in the vertical direction VD transmitted from the crank mechanism 34. The piston rod 36 is coupled to the crosshead 35 at its upper end, and the piston 37 is coupled to its other end. The cylinder block 38 has a hollow shape, and the piston 37 is movably supported along the vertical direction VD thereinside.

The lower part of the pressure boosting pump 32, that is, the cylinder block 38 is disposed inside a vessel 39. The vessel 39 is an adiabatic vacuum vessel, and its inside is maintained at a vacuum state together with the pressure boosting pump 32. The vessel 39 is supplied with liquid hydrogen thereinside and filled to an atmospheric-pressure state.

When the pressure boosting pump 32 is operated, first, at a suction step, at which the piston 37 ascends, the liquid hydrogen from the vessel 39 is sucked into the cylinder block 38. Next, at a compression step, at which the piston 37 descends, the liquid hydrogen inside the cylinder block 38 is compressed, and high-pressure liquid hydrogen is discharged to the outside of the vessel 39.

### <Pressure Boosting Pump>

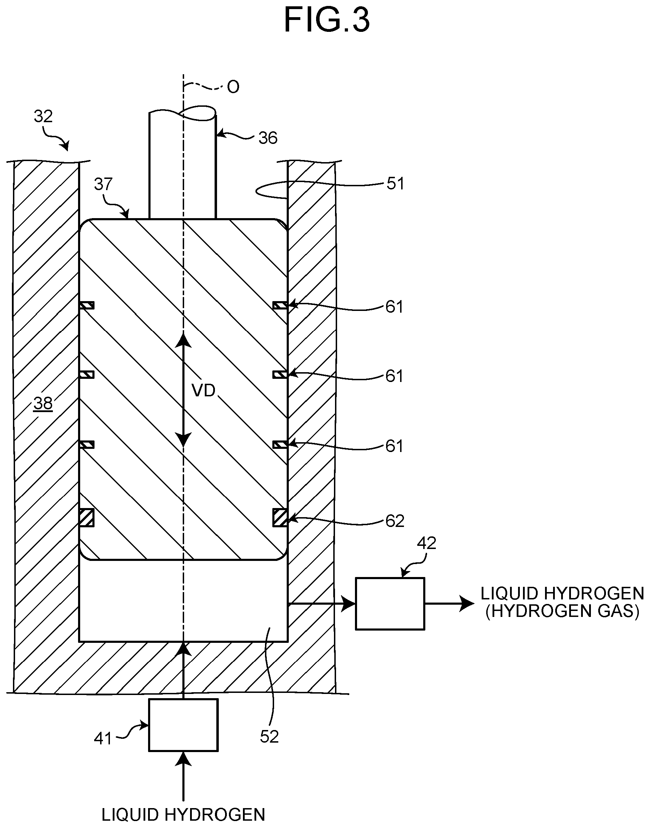

FIG. 3 is a vertical sectional view of the main part of the pressure boosting pump of the first embodiment.

As illustrated in FIG. 3, the pressure boosting pump 32 includes the piston 37, the cylinder block (the cylinder) 38, a suction valve 41 and a discharge valve 42.

The cylinder block 38 functions as a cylinder and is formed with a fitting hole 51 thereinside. The piston 37 is supported on the fitting hole 51 of the cylinder block 38 movably in the axial direction. The piston 37 and the fitting hole 51 have a circular section centered on a center axis O. In the cylinder block 38, the piston 37 is disposed in the fitting hole 51, and thereby a compression chamber 52 is sectioned. When the piston 37 descends, the volume of the compression chamber 52 decreases, and liquid hydrogen in the compression chamber 52 is compressed.

The suction valve 41 and the discharge valve 42 are provided in the cylinder block 38 and communicate with the compression chamber 52. The suction valve 41 is opened at a suction step, at which the piston 37 ascends, thereby causing the liquid hydrogen to be sucked into the compression chamber 52 of the cylinder block 38. The discharge valve 42 is opened at a compression step, at which the piston 37 descends, thereby causing high-pressure liquid hydrogen compressed in the compression chamber 52 to be discharged to the outside.

The pressure boosting pump 32 includes a piston ring 61 and a wear ring 62. That is, the piston 37 is provided with the piston ring 61 and the wear ring 62 on its outer periphery. The piston ring 61 and the wear ring 62 are disposed on the outer periphery of the piston 37 spaced apart from each other in a direction of the center axis O, which is a direction in which the piston 37 moves. A plurality of (three in the present embodiment) the piston rings 61 are disposed spaced apart from each other in the direction of the center axis O. However, the number of the piston rings 61 is not limited to three. The wear ring 62 is disposed spaced apart on one side of the piston rings 61 in the direction of the center axis O. However, the number of the wear ring 62 is not limited to one.

### <Piston Ring>

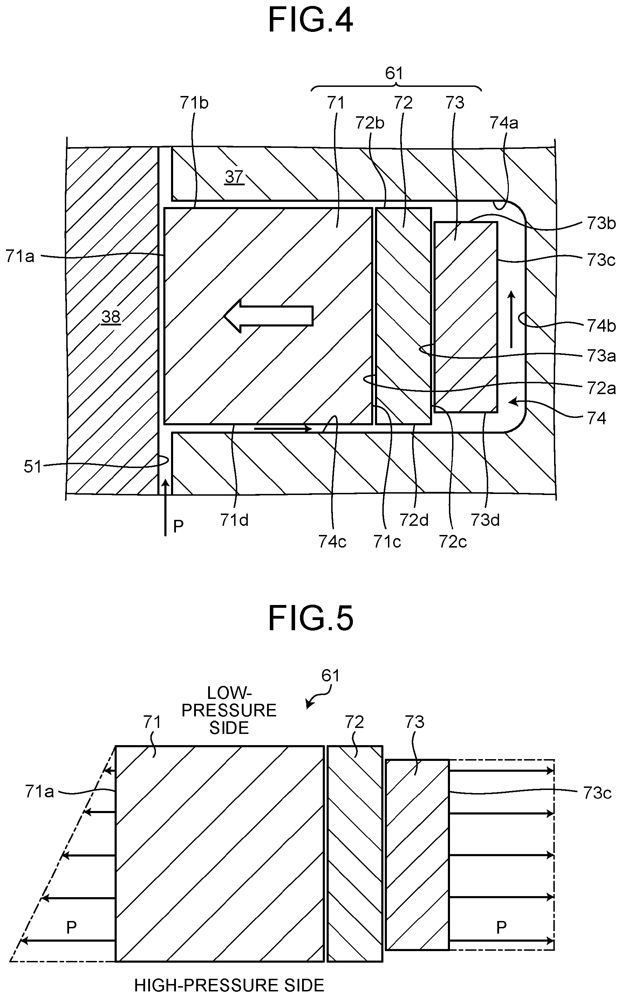

FIG. 4 is a sectional view of a mounting part of the piston ring.

As illustrated in FIG. 4, the piston ring 61 has a piston ring main body 71, an inner ring 72, and a backup ring 73. The piston ring main body 71, the inner ring 72, and the backup ring 73 have a ring shape but differ from each other in their outer diameter and inner diameter dimensions.

The piston 37 is formed with an annular groove 74 on its outer peripheral face along a circumferential direction. The annular groove 74 has a rectangular sectional shape including a ceiling face 74a, a side face 74b, and a bottom face 74c and opens on the inner peripheral face of the fitting hole 51. In the annular groove 74, the ceiling face 74a, the side face 74b, and the bottom face 74c are each a plane. In the annular groove 74, the ceiling face 74a and the bottom face 74c face each other in parallel with each other, and the ceiling face 74a and the bottom face 74c are at substantially right angles to the side face 74b. In the annular groove 74, the side face 74b faces the inner face of the fitting hole 51 of the cylinder block 38 in parallel therewith.

The piston ring 61 is disposed in the annular groove 74. That is, the piston ring main body 71 is disposed outside in a radial direction, that is, closer to the inner peripheral face of the fitting hole 51 in the annular groove 74. The inner ring 72 is disposed inside the piston ring main body 71 in the radial direction, that is, closer to the center (the center axis O) of the piston 37. The backup ring 73 is disposed inside the inner ring 72 in the radial direction, that is, closer to the center (the center axis O) of the piston 37. The piston ring 61 includes the piston ring main body 71, the inner ring 72, and the backup ring 73 disposed in this order from the outside toward the inside in the radial direction in the annular groove 74.

The piston ring main body 71 has an outer peripheral face 71a, an upper face 71b, an inner peripheral face 71c, and a lower face 71d. In the piston ring main body 71, the outer peripheral face 71a faces the inner peripheral face of the fitting hole 51, the upper face 71b faces the ceiling face 74a of the annular groove 74, the inner peripheral face 71c is positioned closer to the side face 74b of the annular groove 74, and the lower face 71d faces the bottom face 74c of the annular groove 74. The inner ring 72 has an outer peripheral face 72a, an upper face 72b, an inner peripheral face 72c, and a lower face 72d. In the inner ring 72, the outer peripheral face 72a faces the inner peripheral face 71c of the piston ring main body 71, the upper face 72b faces the ceiling face 74a of the annular groove 74, the inner peripheral face 72c is positioned closer to the side face 74b of the annular groove 74, and the lower face 72d faces the bottom face 74c of the annular groove 74. The backup ring 73 has an outer peripheral face 73a, an upper face 73b, an inner peripheral face 73c, and a lower face 73d. In the backup ring 73, the outer peripheral face 73a faces the inner peripheral face 72c of the inner ring 72, the upper face 73b faces the ceiling face 74a of the annular groove 74, the inner peripheral face 73c faces the side face 74b of the annular groove 74, and the lower face 73d faces the bottom face 74c of the annular groove 74.

The piston ring main body 71 is disposed in the annular groove 74, and the piston ring main body 71, the inner ring 72, and the backup ring 73 are movable in response to the pressure of the liquid hydrogen from the compression chamber 52 (refer to FIG. 3) acting on the annular groove 74.

The piston ring main body 71, the inner ring 72, and the backup ring 73 are formed of different materials, resulting in differing in hardness. That is, the hardness of the inner ring 72 is lower than the hardness of the piston ring main body 71. In other words, the inner ring 72 is softer than the piston ring main body 71. The piston ring main body 71 is formed of a PEEK-based material having polyetheretherketone as a main component. The inner ring 72 is formed of a PTFE material having polytetrafluoroethylene as a main component.

Here, the hardness is the durometer hardness, and the durometer is a rubber hardness tester. The durometer presses an indenter of a certain shape against the surface of a sample by the force of a spring to give deformation and measures hardness based on the pushing depth of the indenter into the sample with the sample's resistance force and the spring force balanced. The durometer shows a larger value as the force pushing back the indenter is larger, which means that it is harder. Note that the durometer is the trade name of U.S. Shore Inc. In the present embodiment, the durometer hardness of the piston ring main body 71 is preferably 1.1 to 1.6 times the durometer hardness of the inner ring 72.

### <Piston Ring Main Body>

The piston ring main body 71 contains PEEK as the main component, polytetrafluoroethylene (PTFE) in an amount of 5% by weight or more and 25% by weight or less, carbon fibers in an amount of 5% by weight or more and 25% by weight or less, and zinc oxide whiskers in an amount of 5% by weight or more and 20% by weight or less. These are basic components, and others are materials inevitably mixed in.

The piston ring main body 71 is a base material using PEEK, which has higher strength than PTFE, as the main component. PEEK does not have a solid lubrication function, and thus PTFE, which has the solid lubrication function, is added. The amount of PTFE is preferably 5% by weight or more because if the amount is less than 5% by weight, a solid lubrication effect is not produced. On the other hand, the amount of PTFE is preferably 25% by weight or less because if the amount is greater than 25% by weight, significant improvement in the solid lubrication effect cannot be expected. The amount of PTFE is most preferably about 20% by weight.

The amount of the carbon fibers is preferably 5% by weight or more because if the amount is less than 5% by weight, improvement in strength cannot be obtained. On the other hand, the amount of the carbon fibers is preferably 25% by weight or less because if the amount is greater than 25% by weight, more dropouts occur, and the dropped carbon fibers will wear a wear-resistant material for ultra-low temperature uses. The amount of the carbon fibers is most preferably about 20% by weight. As the carbon fibers, PAN-based or pitch-based ones are suitably used, with a fiber length of 10 to 1,000 µm and preferably 50 to 200 µm and a fiber diameter of 1 to 50 µm and preferably 7 to 15 µm.

The amount of the zinc oxide whiskers is preferably 5% by weight or more because if the amount is less than 5% by weight, the function of preventing carbon fiber dropouts cannot be obtained. On the other hand, the amount of the zinc oxide whiskers is preferably 20% by weight or less because even if the amount is greater than 20% by weight, significant improvement in strength and a transfer effect cannot be expected. The amount of the zinc oxide whiskers is most preferably about 10% by weight. The zinc oxide whiskers are preferably tetrapod-shaped, including a nucleus and a needle-like crystalline part extending from the nucleus in four-axis directions. The zinc oxide whiskers are available as a product with the trade name Pana-Tetra. The length of the needle-like crystalline part is 3 to 200 µm and preferably 5 to 50 µm, and the diameter of the nucleus is 0.1 to 10 µm and preferably 0.3 to 3 µm.

In addition, a bronze powder in an amount of about 10% by weight may be contained. By adding the bronze powder, which is expected to promote the transfer effect of PTFE, wear resistance improves. By limiting the amount of the bronze powder to about 10% by weight, the mixing to PEEK, which is the base material, is optimized. The composition of the bronze powder contains Sn in an amount of 2 to 15% by weight and preferably 3 to 12% by weight and Cu in an amount of 85 to 98% by weight and preferably 88 to 92% by weight.

### <Inner Ring>

The inner ring 72 contains PTFE as a main component in an amount of 35% by weight or more, a bronze powder in an amount of 5% by weight or more and 30% by weight or less, carbon fibers in an amount of 5% by weight or more and 15% by weight or less, and zinc oxide whiskers in an amount of 5% by weight or more and 20% by weight or less. These are basic components, and others are materials inevitably mixed in.

The inner ring 72 is a base material using PTFE, which has a function as a solid lubricant, as the main component. By adding the bronze powder to PTFE, required strength is ensured. In addition, the bronze powder promotes transfer of PTFE to a metal material with which it slides with friction. By PTFE being transferred to the metal material, wear is reduced. To achieve even higher strength, the carbon fibers are added. To prevent carbon fiber dropouts, the zinc oxide whiskers are added. In addition, the zinc oxide whiskers have the function of more promoting the effect of transferring PTFE to the metal material than the bronze powder, even in ultralow-temperature environments such as liquid hydrogen temperature (20 K).

The bronze powder is preferably added in an amount of 5% by weight or more because if the amount is less than 5% by weight, desired strength cannot be obtained. On the other hand, the amount of the bronze powder is preferably 30% by weight or less because even if the amount is greater than 30% by weight, significant improvement in strength and the transfer effect cannot be expected. The amount of the bronze powder is most preferably about 20% by weight. The composition of the bronze powder contains Sn in an amount of 2 to 15% by weight and preferably 3 to 12% by weight and Cu in an amount of 85 to 98% by weight and preferably 88 to 92% by weight.

The amount of the carbon fibers is preferably 5% by weight or more because if the amount is less than 5% by weight, improvement in strength cannot be obtained. On the other hand, the amount of the carbon fibers is preferably 15% by weight or less because if the amount is greater than 15% by weight, more dropouts occur, and the dropped carbon fibers will wear a wear-resistant material for ultra-low temperature uses. The amount of the carbon fibers is most preferably about 10% by weight. As the carbon fibers, pitch-based ones are suitably used, with a fiber length of 10 to 1,000 µm and preferably 50 to 200 µm and a fiber diameter of 1 to 50 µm and preferably 7 to 15 µm.

The amount of the zinc oxide whiskers is preferably 5% by weight or more because if the amount is less than 5% by weight, the function of preventing carbon fiber dropouts cannot be obtained. On the other hand, the amount of the zinc oxide whiskers is preferably 20% by weight or less because even if the amount is greater than 20% by weight, significant improvement in strength and a transfer effect cannot be expected. The amount of the zinc oxide whiskers is most preferably about 10% by weight. The zinc oxide whiskers are preferably tetrapod-shaped, including a nucleus and a needle-like crystalline part extending from the nucleus in four-axis directions. The zinc oxide whiskers are available as a product with the trade name Pana-Tetra. The length of the needle-like crystalline part is 3 to 200 µm and preferably 5 to 50 µm, and the diameter of the nucleus is 0.1 to 10 µm and preferably 0.3 to 3 µm.

The weight ratio of the carbon fibers to the zinc oxide whiskers is set to be 1.0 or more and 1.5 or less. The zinc oxide whiskers have the function of preventing carbon fiber dropouts, and thus the weight ratio of the carbon fibers to the zinc oxide whiskers is preferably 1.5 or less because if the weight ratio of the carbon fibers to the zinc oxide whiskers is greater than 1.5, more carbon fiber dropouts occur, and wear will increase. On the other hand, the weight ratio of the carbon fibers to the zinc oxide whiskers is preferably 1.0 or more because at least the carbon fibers in an amount equal to that of the zinc oxide whiskers are preferably added considering strength improvement by the carbon fibers.

### <Backup Ring>

The backup ring 73 is formed of stainless steel. The backup ring 73 is preferably formed of, but not limited to, any of SUS304, SUS304L, SUS316, and SUS316L, for example.

### <Wear Ring>

The wear ring 62 functions as a bearing for the piston 37 and the like supported on the fitting holes 51 of the cylinder block 38 to prevent seizure and eccentricity. The wear ring 62 is formed of a PITE material having polytetrafluoroethylene as a main component. The PTFE material used for the wear ring 62 is the same as that for the inner ring 72.

### <Stress Distribution in Piston Ring>

FIG. 5 is a schematic diagram illustrating pressure distributions acting on the piston ring.

As illustrated in FIG. 4, the piston ring 61 disposed in the annular groove 74 of the piston 37 receives pressure P from the high-pressure liquid hydrogen in the compression chamber 52 below (refer to FIG. 3). The pressure P acts on the lower part of the piston ring 61 through the gap between the outer peripheral face of the piston 37 and the inner peripheral face of the fitting hole 51. The pressure P acts on the inner peripheral face of the piston ring 61 (the inner peripheral face 73c of the backup ring 73) through the gap between the piston ring 61 and the annular groove 74 to press the outer peripheral face of the piston ring 61 (the outer peripheral face 71a of the piston ring main body 71) against the inner peripheral face of the fitting hole 51 and seals it.

In this process, as illustrated in FIG. 5, in the piston ring 61, pressure distributions are generated on the outer peripheral face and the inner peripheral face. That is, the piston ring 61 has high pressure on the lower side, which is the compression chamber 52, and low pressure on the upper side. Thus, the outer peripheral face of the piston ring 61 has a pressure distribution in which the pressure on the lower side is higher than the pressure on the upper side. The inner peripheral face of the piston ring 61 has a pressure distribution in which the pressure on the upper side and the pressure on the lower side are equal. Specifically, the outer peripheral face 71a of the piston ring main body 71 has a pressure distribution in which the pressure on the lower side is higher than the pressure on the upper side. The inner peripheral face of the backup ring 73 has a pressure distribution in which the pressure on the upper side and the pressure on the lower side are equal.

### <Operation of Piston Ring>

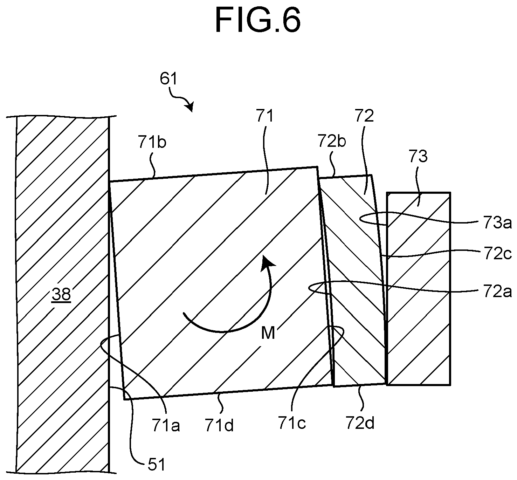

FIG. 6 is a schematic diagram illustrating the operation of the piston ring.

As illustrated in FIG. 5 and FIG. 6, in the piston ring 61, when the outer peripheral face 71a of the piston ring main body 71 has a pressure distribution in which the pressure on the lower side is higher than the pressure on the upper side, a counterclockwise rotational moment M in FIG. 6 acts on the piston ring main body 71. The piston ring main body 71 then turns counterclockwise in FIG. 6 due to the rotational moment M. When the piston ring main body 71 turns, only the part of the outer peripheral face 71a closer to the upper face 71b is in contact with the inner peripheral face of the fitting hole 51, and only the part of the inner peripheral face 71c closer to the lower face 71d is in contact with the outer peripheral face 72a of the inner ring 72. If the piston ring main body 71 becomes in a one-sided contact state with the inner peripheral face of the fitting hole 51 and the outer peripheral face 72a of the inner ring 72, sealing performance reduces. If the piston ring main body 71 continues to be in the one-sided contact state, local wear progresses due to the movement of the piston 37, making it difficult to maintain long-term sealing performance.

In the first embodiment, however, in the piston ring 61, the hardness of the inner ring 72 is lower than the hardness of the piston ring main body 71. Thus, when the piston ring main body 71 rotates counterclockwise in FIG. 6 due to the rotational moment M, the inner ring 72 receives stress from the part of the inner peripheral face 71c of the piston ring main body 71 closer to the lower face 71d to become deformed. That is, the inner ring 72 becomes deformed such that the middle part in the up-and-down direction warps toward the backup ring 73. In the backup ring, the pressure P acts on the inner peripheral face 73c, and the inner ring 72 transmits the pressure P from the backup ring 73 to the piston ring main body 71. That is, in the inner ring 72, the upper part of the outer peripheral face 72a (closer to the upper face 72b) is in contact with and presses the upper part of the inner peripheral face 71c of the piston ring main body 71 (closer to the upper face 71b), and the lower part of the outer peripheral face 72a (closer to the lower face 72d) is in contact with and presses the lower part of the inner peripheral face 71c of the piston ring main body 71 (closer to the lower face 71d).

Consequently, in the piston ring main body 71, the rotational moment M is counteracted by the pressing force of the deformed inner ring 72, and as illustrated in FIG. 4, the entire area of the outer peripheral face 71a along the center axis O can be in contact with the inner peripheral face of the fitting hole 51. Thus, in the piston ring 61, the entire face of the outer peripheral face 71a of the piston ring main body 71 can press the inner peripheral face of the fitting hole 51, thus preventing one-sided contact and ensuring sealing performance.

### [Second Embodiment]

### <Piston Ring>

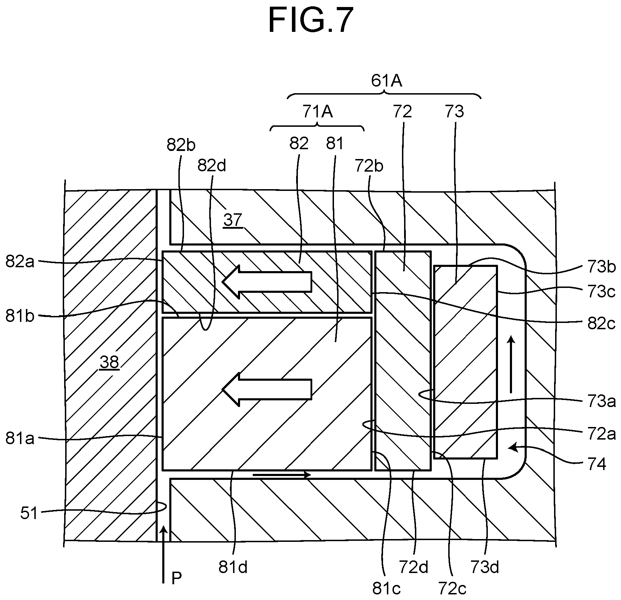

FIG. 7 is a sectional view of a mounting part of a piston ring used for a pressure boosting pump of a second embodiment. Components having the same functions as those of the first embodiment described above are denoted by the same symbols, and detailed descriptions thereof will be omitted.

As illustrated in FIG. 7, this piston ring 61A has a piston ring main body 71A, the inner ring 72, and the backup ring 73. The piston ring main body 71A has a high-pressure piston ring main body 81 and a low-pressure piston ring main body 82. The high-pressure piston ring main body 81 is positioned closer to the compression chamber 52 (refer to FIG. 3) (on the lower side in FIG. 7). The low-pressure piston ring main body 82 is positioned on an opposite side of the high-pressure piston ring main body 81 from the compression chamber 52 (on the upper side in FIG. 7).

The high-pressure piston ring main body 81 and the low-pressure piston ring main body 82 have a ring shape and have the same outer diameter and inner diameter dimensions. The piston ring 61A is disposed in the annular groove 74. The piston ring 61A includes the piston ring main body 71A, the inner ring 72, and the backup ring 73 disposed in this order from the outside toward the inside in the radial direction in the annular groove 74. In the piston ring main body 71A, the high-pressure piston ring main body 81 is positioned closer to the compression chamber 52 and the low-pressure piston ring main body 82 is positioned on an opposite side from the compression chamber 52.

The high-pressure piston ring main body 81 has an outer peripheral face 81a, an upper face 81b, an inner peripheral face 81c, and a lower face 81d. The low-pressure piston ring main body 82 has an outer peripheral face 82a, an upper face 82b, an inner peripheral face 82c, and a lower face 82d. In the high-pressure piston ring main body 81 and the low-pressure piston ring main body 82, the outer peripheral faces 81a and 82a face the inner peripheral face of the fitting hole 51 and the inner peripheral faces 81c and 82c face the outer peripheral face 72a of the inner ring 72. In the high-pressure piston ring main body 81, the upper face 81b faces the ceiling face 74a of the annular groove 74, and in the low-pressure piston ring main body 82, the lower face 82d faces the bottom face 74c of the annular groove 74. The lower face 81d of the high-pressure piston ring main body 81 and the upper face 82b of the low-pressure piston ring main body 82 face each other.

The high-pressure piston ring main body 81 and the low-pressure piston ring main body 82 are formed of different materials, resulting in differing in hardness. That is, the hardness of the low-pressure piston ring main body 82 is lower than the hardness of the high-pressure piston ring main body 81. In other words, the low-pressure piston ring main body 82 is softer than the high-pressure piston ring main body 81. The high-pressure piston ring main body 81 is formed of a PEEK-based material having polyetheretherketone as a main component, and the low-pressure piston ring main body 82 is formed of a PTFE material having polytetrafluoroethylene as a main component. In the present embodiment, the durometer hardness of the high-pressure piston ring main body 81 is preferably 1.0 to 1.5 times the durometer hardness of the low-pressure piston ring main body 82.

The hardness of the inner ring 72 is less than or equal to the hardness of the low-pressure piston ring main body 82. In other words, the inner ring 72 has the same hardness as that of the low-pressure piston ring main body 82 or is softer than the low-pressure piston ring main body 82. In the present embodiment, the durometer hardness of the low-pressure piston ring main body 82 is preferably 1.0 to 1.6 times the durometer hardness of the inner ring 72.

### <Stress Distribution in Piston Ring>

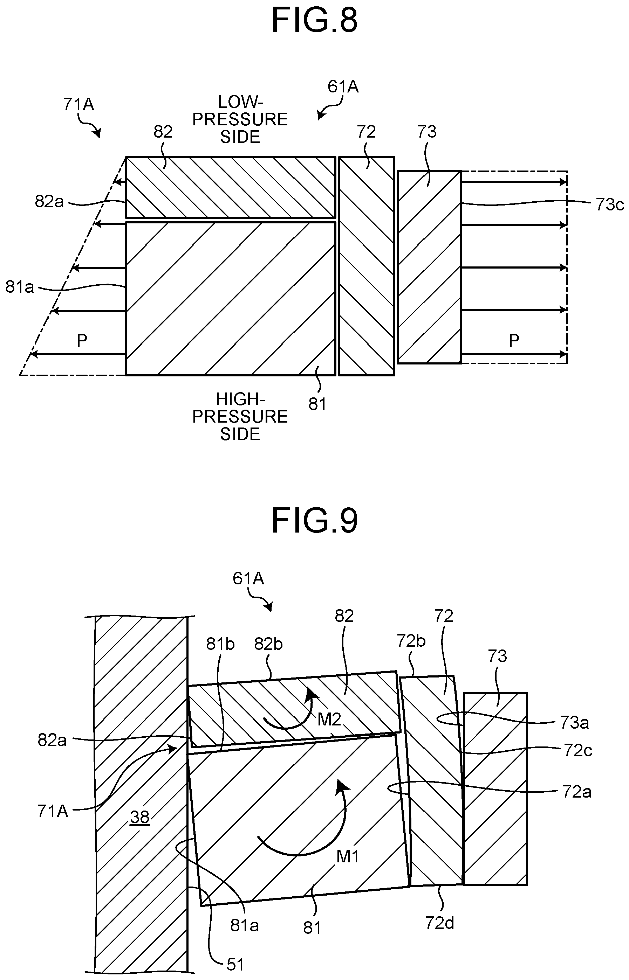

FIG. 8 is a schematic diagram illustrating pressure distributions acting on the piston ring.

As illustrated in FIG. 7, the piston ring 61A disposed in the annular groove 74 of the piston 37 receives pressure P from the high-pressure liquid hydrogen in the compression chamber 52 below (refer to FIG. 7). The pressure P acts on the lower part of the piston ring 61A through the gap between the outer peripheral face of the piston 37 and the inner peripheral face of the fitting hole 51. The pressure P acts on the inner peripheral face of the piston ring 61A (the inner peripheral face 73c of the backup ring 73) through the gap between the piston ring 61A and the annular groove 74 to press the outer peripheral face of the piston ring 61A (the outer peripheral faces 81a and 82a of the piston ring main bodies 81 and 82, respectively) against the inner peripheral face of the fitting hole 51 and seals it.

In this process, as illustrated in FIG. 8, in the piston ring 61A, pressure distributions are generated on the outer peripheral face and the inner peripheral face. That is, the piston ring 61A has high pressure on the lower side, which is the compression chamber 52, and low pressure on the upper side. Thus, the outer peripheral face of the piston ring 61A has a pressure distribution in which the pressure on the lower side is higher than the pressure on the upper side. The inner peripheral face of the piston ring 61A has a pressure distribution in which the pressure on the upper side and the pressure on the lower side are equal. Specifically, the outer peripheral faces 81a and 82a of the high-pressure piston ring main body 81 and the low-pressure piston ring main body 82, respectively, have a pressure distribution in which the pressure on the lower side is higher than the pressure on the upper side. The inner peripheral face of the backup ring 73 has a pressure distribution in which the pressure on the upper side and the pressure on the lower side are equal.

### <Operation of Piston Ring>

FIG. 9 is a schematic diagram illustrating the operation of the piston ring.

As illustrated in FIG. 8 and FIG. 9, in the piston ring 61A, when the outer peripheral faces 81a and 82a of the high-pressure piston ring main body 81 and the low-pressure piston ring main body 82, respectively, have a pressure distribution in which the pressure on the lower side is higher than the pressure on the upper side, counterclockwise rotational moments M1 and M2 in FIG. 9 act on the high-pressure piston ring main body 81 and the low-pressure piston ring main body 82, respectively. The high-pressure piston ring main body 81 then turns counterclockwise in FIG. 9 due to the rotational moment M1. When the high-pressure piston ring main body 81 turns, only the part of the outer peripheral face 81a closer to the upper face 81b is in contact with the inner peripheral face of the fitting hole 51, and only the part of the inner peripheral face 81c closer to the lower face 81d is in contact with the outer peripheral face 72a of the inner ring 72. Similarly, the low-pressure piston ring main body 82 turns counterclockwise in FIG. 9 due to the rotational moment M2. When the low-pressure piston ring main body 82 turns, only the part of the outer peripheral face 82a closer to the upper face 82b is in contact with the inner peripheral face of the fitting hole 51, and only the part of the inner peripheral face 82c closer to the lower face 82d is in contact with the outer peripheral face 72a of the inner ring 72.

If the high-pressure piston ring main body 81 and the low-pressure piston ring main body 82 become in a one-sided contact state with the inner peripheral face of the fitting hole 51 and the outer peripheral face 72a of the inner ring 72, sealing performance reduces. If the high-pressure piston ring main body 81 and the low-pressure piston ring main body 82 continue to be in the one-sided contact state, local wear progresses due to the movement of the piston 37, making it difficult to maintain long-term sealing performance.

In the second embodiment, however, the piston ring 61A includes the high-pressure piston ring main body 81 and the low-pressure piston ring main body 82, and the hardness of the inner ring 72 is lower than the hardness of the high-pressure piston ring main body 81. Thus, when the high-pressure piston ring main body 81 and the low-pressure piston ring main body 82 turn counterclockwise in FIG. 9 due to the rotational moments M and M2, the inner ring 72 receives stress from the part of the inner peripheral face 81c of the high-pressure piston ring main body 81 closer to the lower face 81d to become deformed. That is, the inner ring 72 becomes deformed such that the middle part in the up-and-down direction warps toward the backup ring 73. In the backup ring 73, the pressure P acts on the inner peripheral face 73c, and the inner ring 72 transmits the pressure P from the backup ring to the high-pressure piston ring main body 81 and the low-pressure piston ring main body 82. That is, in the inner ring 72, the upper part of the outer peripheral face 72a (closer to the upper face 72b) is in contact with and presses the low-pressure piston ring main body 82, and the lower part of the outer peripheral face 72a (closer to the lower face 72d) is in contact with and presses the lower part of the inner peripheral face 81c of the high-pressure piston ring main body 81 (closer to the lower face 81d).

Consequently, in the high-pressure piston ring main body 81 and the low-pressure piston ring main body 82, the rotational moments M1 and M2 are counteracted by the pressing force of the deformed inner ring 72, and as illustrated in FIG. 7, the entire areas of the outer peripheral faces 81a and 82a along the center axis O can be in contact with the inner peripheral face of the fitting hole 51. Thus, in the piston ring 61A, the entire faces of the outer peripheral faces 81a and 82a of the high-pressure piston ring main body 81 and the low-pressure piston ring main body 82, respectively, can press the inner peripheral face of the fitting hole 51, thus preventing one-sided contact and ensuring sealing performance.

### [Effects of the Present Embodiment]

A pressure boosting pump according to a first aspect includes the cylinder block (the cylinder) 38 having the compression chamber 52, the suction valve 41 configured to cause liquid hydrogen (a low-temperature fluid) to be sucked into the compression chamber 52, the piston 37 movably supported on the cylinder block 38 and configured to compress the liquid hydrogen in the compression chamber 52, the discharge valve 42 configured to cause the liquid hydrogen in the compression chamber 52 to be discharged, and the piston ring 61 or 61A provided on the outer periphery of the piston 37. The piston ring 61 or 61A has the piston ring main body 71 or 71A positioned closer to the inner peripheral face of the fitting hole 51 and the inner ring 72 positioned closer to the center of the piston 37 than the piston ring main body 71 or 71A is. The hardness of the inner ring 72 is lower than the hardness of the piston ring main body 71 or 71A.

According to the pressure boosting pump according to the first aspect, the hardness of the inner ring 72 is lower than the hardness of the piston ring main body 71 or 71A, and thus when the rotational moment M or M2 acts due to the pressure acting on the piston ring main body 71 or 71A, the inner ring 72 becomes deformed, thereby causing pressure pushing back the piston ring main body 71 or 71A to act. Then, in the piston ring main body 71 or 71A, the rotational moments M1 and M2 are counteracted, and the outer peripheral faces 71a, 81a, and 82a can be properly in contact with the inner peripheral face of the fitting hole 51. Consequently, the sealing performance by the piston ring 61 or 61A can be improved, and sufficient sealing performance can be ensured even when the pressure of the used low-temperature fluid is ultra-high pressure.

A pressure boosting pump according to a second aspect is the pressure boosting pump according to the first aspect, in which the piston ring main body 71 or 71A is formed of the PEEK-based material having polyetheretherketone as the main component, and the inner ring 72 is formed of the PTFE material having polytetrafluoroethylene as the main component. With this configuration, high sealing performance with low friction, low wear, and high strength can be maintained.

A pressure boosting pump according to a third aspect is the pressure boosting pump according to the first aspect or the second aspect, in which the piston ring main body 71A has the high-pressure piston ring main body 81 positioned closer to the compression chamber 52 and the low-pressure piston ring main body 82 positioned on the opposite side of the high-pressure piston ring main body 81 from the compression chamber 52, and the hardness of the low-pressure piston ring main body 82 is lower than the hardness of the high-pressure piston ring main body 81. With this configuration, the inner ring 72 and the low-pressure piston ring main body 82 become deformed, thereby in the high-pressure piston ring main body 81, the outer peripheral face 81a can be properly in contact with the inner peripheral face of the fitting hole 51, and the sealing performance by the piston ring 61A can be improved.

A pressure boosting pump according to a fourth aspect is the pressure boosting pump according to the third aspect, in which the hardness of the inner ring 72 is less than or equal to the hardness of the low-pressure piston ring main body 82. With this configuration, the inner ring 72 becomes deformed, thereby in the low-pressure piston ring main body 82, the outer peripheral face 82a can be properly in contact with the inner peripheral face of the fitting hole 51, and the sealing performance by the piston ring 61A can be improved.

A pressure boosting pump according to a fifth aspect is the pressure boosting pump according to the third aspect or the fourth aspect, in which the high-pressure piston ring main body 81 is formed of the PEEK-based material having polyetheretherketone as the main component, and the low-pressure piston ring main body 82 is formed of the PTFE material having polyetheretherketone as the main component. With this configuration, high sealing performance with low friction, low wear, and high strength can be maintained.

A pressure boosting pump according to a sixth aspect is the pressure boosting pump according to any one of the first aspect to the fifth aspect, in which the piston 37 is formed with the annular groove 74 on its outer periphery, the piston ring main body 71 or 71A is disposed at the outermost part of the annular groove 74 in the radial direction, the inner ring 72 is disposed inside the piston ring main body 71 or 71A in the radial direction in the annular groove 74, the backup ring 73 is disposed inside the inner ring 72 in the radial direction in the annular groove 74, and the backup ring 73 is formed of stainless steel. With this configuration, the pressure P acting on the backup ring 73 can be properly transmitted to the inner ring 72.

A pressure boosting pump according to a seventh aspect is the pressure boosting pump according to any one of the first aspect to the sixth aspect, in which a plurality of the piston ring main bodies 71 or 71A are provided spaced apart from each other in the direction in which the piston 37 moves, the piston 37 is provided with the wear ring 62 each on one side and another side of the piston ring main bodies 71 or 71A in the axial direction, and the wear ring 62 is formed of the PTFE material having polytetrafluoroethylene as the main component. With this configuration, high sealing performance with low friction, low wear, and high strength can be maintained.

A hydrogen supply system according to an eighth aspect includes the compression device 21 having the pressure boosting pump 32 according to any one of the first aspect to the seventh aspect configured to compress liquid hydrogen as a low-temperature fluid, the evaporation device 22 configured to vaporize the liquid hydrogen compressed by the compression device 21, and the dispenser 23 configured to supply the hydrogen gas vaporized by the evaporation device 22. With this configuration, the pressure boosting pump 32 can improve the sealing performance by the piston ring 61 or 61A, ensuring sufficient sealing performance even when the pressure of the used low-temperature fluid is ultra-high pressure.

In the embodiments described above, the number of the piston ring main body 71 or 71A is one or two, but the number may be three or more.

In the embodiments described above, the pressure boosting pump 32 has been described as used for the compression device 21 of the hydrogen supply system 10, but it is not limited to this field and can be used for any device using a low-temperature fluid.

### Reference Signs List

- 10: Hydrogen supply system
- 11: Container
- 12: Vehicle
- 21: Compression device
- 22: Evaporation device
- 23: Dispenser
- 31: Drive motor
- 32: Pressure boosting pump
- 34: Crank mechanism
- 35: Crosshead
- 36: Piston rod
- 37: Piston
- 38: Cylinder block (cylinder)
- 39: Vessel
- 41: Suction valve
- 42: Discharge valve
- 51: Fitting hole
- 52: Compression chamber
- 61, 61A: Piston ring
- 62: Wear ring
- 71, 71A: Piston ring main body
- 72: Inner ring
- 73: Backup ring
- 74: Annular groove
- 81: High-pressure piston ring main body
- 82: Low-pressure piston ring main body

## Claims

1. A pressure boosting pump (32) comprising:
a cylinder (38) having a compression chamber (52);
a suction valve (41) configured to cause a low-temperature fluid to be sucked into the compression chamber (52);
a piston (37) formed with an annular groove (74) on its outer peripheral face along a circumferential direction and movably supported on the cylinder (38) and configured to compress the low-temperature fluid in the compression chamber (52);
a discharge valve (42) configured to cause the low-temperature fluid in the compression chamber (52) to be discharged;
a piston ring (61, 61A) provided in the annular groove (74) of the piston (37),
wherein the piston ring (61, 61A) has
a piston ring main body (71, 71A) positioned closer to an inner peripheral face of the cylinder (38), and
an inner ring (72) positioned closer to a center of the piston (37) than the piston ring main body (71, 71A) is,
**characterized in that** the piston ring (61, 61A) has
a backup ring (73) positioned toward the center of the piston (37) relative to the inner ring (72),
the inner ring (72) has a hardness lower than a hardness of the piston ring main body (71, 71A), and **in that**
the inner ring (72) is configured to deform under the action of the piston ring main body (71, 71A) and to transmit a pressure acting on an inner peripheral face of the backup ring (73) to the piston ring main body (71, 71A).

2. The pressure boosting pump (32) according to claim 1, wherein
the piston ring main body (71, 71A) is formed of a PEEK-based material having polyetheretherketone as a main component, and
the inner ring (72) is formed of a PTFE material having polytetrafluoroethylene as a main component.

3. The pressure boosting pump (32) according to claim 1 or 2, wherein
the piston ring main body (71A) has a high-pressure piston ring main body (81) positioned closer to the compression chamber (52) and a low-pressure piston ring main body (82) positioned on an opposite side of the high-pressure piston ring main body (81) from the compression chamber (52), and
the low-pressure piston ring main body (82) has a hardness lower than a hardness of the high-pressure piston ring main body (81).

4. The pressure boosting pump (32) according to claim 3, wherein the hardness of the inner ring (72) is less than or equal to the hardness of the low-pressure piston ring main body (82).

5. The pressure boosting pump (32) according to claim 3, wherein
the high-pressure piston ring main body (81) is formed of a PEEK-based material having polyetheretherketone as a main component, and
the low-pressure piston ring main body (82) is formed of a PTFE material having polytetrafluoroethylene as a main component.

6. The pressure boosting pump (32) according to any one of claims 1 to 5, wherein
the piston ring main body (71, 71A) is disposed at an outermost part of the annular groove (74) in a radial direction,
the inner ring (72) is disposed inside the piston ring main body (71, 71A) in the radial direction in the annular groove (74),
the backup ring (73) is disposed inside the inner ring (72) in the radial direction in the annular groove (74), and
the backup ring (73) is formed of stainless steel.

7. The pressure boosting pump (32) according to any one of claims 1 to 6, wherein
the piston ring (61, 61A) includes a plurality of piston rings (61, 61A) provided spaced apart from each other in a direction in which the piston (37) moves,
the piston (37) is provided with a wear ring (62) each on one side and another side of the piston rings (61, 61A) in an axial direction, and
the wear ring (62) is formed of a PTFE material having polytetrafluoroethylene as a main component.

8. A hydrogen supply system comprising:
a compression device (31) including the pressure boosting pump (32) according to any one of claims 1 to 7 configured to compress liquid hydrogen as a low-temperature fluid;
an evaporation device (22) configured to vaporize the liquid hydrogen compressed by the compression device (31); and
a dispenser (23) configured to supply the hydrogen gas vaporized by the evaporation device (22).

## Patentansprüche

1. Druckerhöhungspumpe (32), umfassend:
einen Zylinder (38), der eine Verdichtungskammer (52) aufweist;
ein Saugventil (41), das konfiguriert ist, um zu bewirken, dass ein Niedertemperaturfluid in die Verdichtungskammer (52) angesaugt wird;
einen Kolben (37), der an seiner äußeren Umfangsfläche entlang einer Umfangsrichtung mit einer Ringnut (74) gebildet ist und bewegbar an dem Zylinder (38) gelagert und konfiguriert ist, um das Niedertemperaturfluid in der Verdichtungskammer (52) zu verdichten;
ein Auslassventil (42), das konfiguriert ist, um zu bewirken, dass das Niedertemperaturfluid in der Verdichtungskammer (52) ausgestoßen wird;
einen Kolbenring (61, 61A), der in der Ringnut (74) des Kolbens (37) bereitgestellt ist,
wobei der Kolbenring (61, 61A) Folgendes aufweist
einen Kolbenringhauptkörper (71, 71A), der näher an einer inneren Umfangsfläche des Zylinders (38) positioniert ist, und
einen Innenring (72), der näher an einer Mitte des Kolbens (37) positioniert ist als der Kolbenringhauptkörper (71, 71A),
**dadurch gekennzeichnet, dass** der Kolbenring (61, 61A) einen Stützring (73) aufweist, der in Bezug auf den Innenring (72) zur der Mitte des Kolbens (37) positioniert ist,
der Innenring (72) eine geringere Härte als die Härte des Kolbenringhauptkörpers (71, 71A) aufweist, und dass
der Innenring (72) konfiguriert ist, um sich unter der Wirkung des Kolbenringhauptkörpers (71, 71A) verformt zu werden und um einen auf eine innere Umfangsfläche des Stützrings (73) wirkenden Druck auf den Kolbenringhauptkörper (71, 71A) zu übertragen.

2. Druckerhöhungspumpe (32) nach Anspruch 1, wobei
der Kolbenringhauptkörper (71, 71A) aus einem PEEK-basierten Material gebildet ist, das Polyetheretherketon als Hauptbestandteil aufweist, und
der Innenring (72) aus einem PTFE-Material gebildet ist, das Polytetrafluorethylen als Hauptbestandteil aufweist.

3. Druckerhöhungspumpe (32) nach Anspruch 1 oder 2, wobei
der Kolbenringhauptkörper (71A) einen Hochdruck-Kolbenringhauptkörper (81) aufweist, der näher an der Verdichtungskammer (52) positioniert ist, und einen Niederdruck-Kolbenringhauptkörper (82), der auf einer gegenüberliegenden Seite des Hochdruck-Kolbenringhauptkörpers (81) von der Verdichtungskammer (52) positioniert ist, und
der Niederdruck-Kolbenringhauptkörper (82) eine geringere Härte als die Härte des Hochdruck-Kolbenringhauptkörpers (81) aufweist.

4. Druckerhöhungspumpe (32) nach Anspruch 3, wobei die Härte des Innenrings (72) geringer als oder gleich wie die Härte des Niederdruck-Kolbenringhauptkörpers (82) ist.

5. Druckerhöhungspumpe (32) nach Anspruch 3, wobei
der Hochdruck-Kolbenringhauptkörper (81) aus einem PEEK-basierten Material gebildet ist, das Polyetheretherketon als Hauptbestandteil aufweist, und
der Niederdruck-Kolbenringhauptkörper (82) aus einem PTFE-Material gebildet ist, das Polytetrafluorethylen als Hauptbestandteil aufweist.

6. Druckerhöhungspumpe (32) nach einem der Ansprüche 1 bis 5, wobei
der Kolbenringhauptkörper (71, 71A) in radialer Richtung an einem äußersten Teil der Ringnut (74) angeordnet ist,
der Innenring (72) in radialer Richtung innerhalb des Kolbenringhauptkörpers (71, 71A) in der Ringnut (74) angeordnet ist,
der Stützring (73) in radialer Richtung innerhalb des Innenrings (72) in der Ringnut (74) angeordnet ist, und
der Stützring (73) aus Edelstahl gebildet ist.

7. Druckerhöhungspumpe (32) nach einem der Ansprüche 1 bis 6, wobei
der Kolbenring (61, 61A) eine Vielzahl von Kolbenringen (61, 61A) beinhaltet, die in einer Richtung, in der sich der Kolben (37) bewegt, voneinander beabstandet bereitgestellt sind,
der Kolben (37) jeweils auf einer Seite und auf der anderen Seite der Kolbenringe (61, 61A) in axialer Richtung mit einem Verschleißring (62) versehen ist, und
der Verschleißring (62) aus einem PTFE-Material gebildet ist, das Polytetrafluorethylen als Hauptbestandteil aufweist.

8. Wasserstoffzufuhrsystem, umfassend:
eine Verdichtungsvorrichtung (31), die die Druckerhöhungspumpe (32) nach einem der Ansprüche 1 bis 7 beinhaltet und konfiguriert ist, um flüssigen Wasserstoff als Niedertemperaturfluid zu verdichten;
eine Verdampfungsvorrichtung (22), die konfiguriert ist, um den flüssigen Wasserstoff zu verdampfen, der durch die Verdichtungsvorrichtung (31) verdichtet wird; und
einen Dispenser (23), der konfiguriert ist, um das Wasserstoffgas zuzuführen, das durch die Verdampfungsvorrichtung (22) verdampft wird.

## Revendications

1. Pompe de surpression (32) comprenant :
un cylindre (38) ayant une chambre de compression (52) ;
une soupape d'aspiration (41) configurée pour provoquer l'aspiration d'un fluide à basse température dans la chambre de compression (52) ;
un piston (37) formé avec une gorge annulaire (74) sur sa face périphérique externe le long d'une direction circonférentielle et supporté de manière mobile sur le cylindre (38) et configuré pour comprimer le fluide à basse température dans la chambre de compression (52) ;
une soupape de refoulement (42) configurée pour provoquer le refoulement du fluide à basse température dans la chambre de compression (52) ;
un segment de piston (61, 61A) disposé dans la gorge annulaire (74) du piston (37),
dans lequel le segment de piston (61, 61A) a
un corps principal de segment de piston (71, 71A) positionné plus près d'une face périphérique interne du cylindre (38), et
une bague interne (72) positionnée plus près d'un centre du piston (37) que ne l'est le corps principal de segment de piston (71, 71A),
**caractérisée en ce que** le segment de piston (61, 61A) a
une bague d'appui (73) positionnée vers le centre du piston (37) par rapport à la bague interne (72),
la bague interne (72) ayant une dureté inférieure à celle du corps principal de segment de piston (71, 71A), et **en ce que**
la bague interne (72) est configurée pour se déformer sous l'action du corps principal de segment de piston (71, 71A) et pour transmettre une pression agissant sur une face périphérique interne de la bague d'appui (73) au corps principal de segment de piston (71, 71A).

2. Pompe de surpression (32) selon la revendication 1, dans laquelle
le corps principal de segment de piston (71, 71A) est formé avec un matériau à base de PEEK ayant la polyétheréthercétone comme composant principal, et
la bague interne (72) est formée avec un matériau à base de PTFE ayant le polytétrafluoroéthylène comme composant principal.

3. Pompe de surpression (32) selon la revendication 1 ou 2, dans laquelle
le corps principal de segment de piston (71A) comprend un corps principal de segment de piston haute pression (81) positionné plus près de la chambre de compression (52) et un corps principal de segment de piston basse pression (82) positionné du côté opposé du corps principal de segment de piston haute pression (81) par rapport à la chambre de compression (52), et
le corps principal de segment de piston basse pression (82) a une dureté inférieure à celle du corps principal de segment de piston haute pression (81).

4. Pompe de surpression (32) selon la revendication 3, dans laquelle la dureté de la bague interne (72) est inférieure ou égale à la dureté du corps principal de segment de piston basse pression (82).

5. Pompe de surpression (32) selon la revendication 3, dans laquelle
le corps principal de segment de piston haute pression (81) est formé avec un matériau à base de PEEK ayant la polyétheréthercétone comme composant principal, et
le corps principal de segment de piston basse pression (82) est formé avec un matériau à base de PTFE ayant le polytétrafluoroéthylène comme composant principal.

6. Pompe de surpression (32) selon l'une quelconque des revendications 1 à 5, dans laquelle
le corps principal de segment de piston (71, 71A) est disposé à la partie la plus externe de la gorge annulaire (74) dans une direction radiale,
la bague interne (72) est disposée à l'intérieur du corps principal de segment de piston (71, 71A) dans la direction radiale dans la gorge annulaire (74),
la bague d'appui (73) est disposée à l'intérieur de la bague interne (72) dans la direction radiale dans la gorge annulaire (74), et
la bague d'appui (73) est formée en acier inoxydable.

7. Pompe de surpression (32) selon l'une quelconque des revendications 1 à 6, dans laquelle
le segment de piston (61, 61A) comprend une pluralité de segments de piston (61, 61A) disposés espacés les uns des autres dans une direction dans laquelle le piston (37) se déplace,
le piston (37) est pourvu d'une bague d'usure (62) d'un côté et de l'autre des segments de piston (61, 61A) dans une direction axiale, et
la bague d'usure (62) est formée avec un matériau à base de PTFE ayant le polytétrafluoroéthylène comme composant principal.

8. Système d'alimentation en hydrogène comprenant :
un dispositif de compression (31) comprenant la pompe de surpression (32) selon l'une quelconque des revendications 1 à 7, configuré pour comprimer de l'hydrogène liquide en tant que fluide à basse température ;
un dispositif d'évaporation (22) configuré pour vaporiser l'hydrogène liquide comprimé par le dispositif de compression (31) ; et
un distributeur (23) configuré pour fournir le gaz hydrogène vaporisé par le dispositif d'évaporation (22).
